# EUROPÄISCHE PATENTANMELDUNG

(11) **EP 0 798 886 A2**
(43) Veröffentlichungstag der Anmeldung: **01.10.1997**
(21) Anmeldenummer: 96119501.3
(22) Anmeldetag: 05.12.1996
(51) Int. Cl.: H04H 1/00, H04Q 7/08, G08B 3/10

(54) **Funkruf- und elektronischen Briefkastensystem mit Verwendung von terrestrischen und satelliten Rundfunkanlagen**

(30) Priorität: 25.03.1996 DE 19611639
(71) Anmelder: Deutsche Telekom AG, 53113 Bonn (DE)
(72) Erfinder: Dintelmann, Friedrich, Dr., 64354 Reinheim (DE); Ortgies, Gerd, Dr., 64293 Darmstadt (DE); Rücker, Friedrich, 67575 Eich (DE); von Hugo, Dirk, Dr., 64289 Darmstadt (DE)

(57) **Zusammenfassung**

Das vorgeschlagene Paging- und Mailboxsystem (10 bzw. 11) benutzt eine in Europa weitgehend vorhandene Infrastruktur. Diese besteht für regionale Anwendungen aus den terrestrischen Fernsehsendern (10a) und für die überregionale und länderübergreifende Nutzung aus den bereits existierenden Fernsehrundfunksatelliten (12) sowie fernsehtexttauglichen Fernsehempfangsanlagen, wobei an den Fernsehsendern, bzw. an der Feederlinkstation (11a) für das Satellitenfernsehen je ein Mailboxsystem (10 bzw. 11) eingerichtet ist. Die Erfindung kann somit ohne großen Aufwand an bereits vorhandenen Anlagen europaweit realisiert werden. Das vorgeschlagene System vermeidet den bei terrestrischen Pagingsystemen bestehenden Nachteil, daß die geographische Region bekannt sein muß, in der sich der Adressat aufhält, oder daß sonst der Ruf über viele Sender gleichzeitig oder sequentiell ausgestrahlt werden muß. Gegenüber herkömmlichen Pagingsystemen auf Satellitenbasis besteht der Vorteil, daß keine aufwendige Infrastruktur geschaffen werden muß. Insbesondere sind keine teueren Empfänger erforderlich, sondern es genügen übliche Fernsehempfänger für den terrestrischen und/oder Satellitenfernsehrundfunk mit Fernsehtextdekodern. Das vorgeschlagene Paging- und Mailboxsystem besteht aus terrestrischen Fernsehsendern (10a) und/oder einem oder mehreren Fernsehrundfunk-Satelliten (12) entsprechend Fig. 1. Es wird ein analoges Fernsehsignal abgestrahlt, das direkt empfangen werden kann. Die Empfangsanlagen der Teilnehmer (1-9) können Empfangsanlagen für den analogen terrestrischen Fernsehrundfunk sowie für den Satellitenfernsehrundfunk sein. Die Untermenge der Empfangsanlagen der Teilnehmer (4-9) enthält bekannte fernsehtexttaugliche Dekoder. Im Falle des Satellitenfernsehrundfunks wird dem Satelliten (12) das abzustrahlende Fernsehsignal über eine bekannte Feederlinkstation (11a) zugeführt. Die terrestrischen Fernsehsender und/oder die Feederlinkstation sind mit je einem Mailboxsystem (10 bzw. 11) verbunden.

## Beschreibung

Die Erfindung betrifft ein Paging- und Mailboxsystem zur Übermittlung von Nachrichten an Dritte nach dem Oberbegriff des Patentanspruchs 1.

Die Mobilität der heutigen Gesellschaft macht es wünschenswert, daß der einzelne jederzeit für jedermann an praktisch jedem Ort der Erde erreichbar ist.

Um diesem Ziel nahezukommen, gibt es gegenwärtig eine Vielzahl von Kommunikationssystemen wie die öffentlichen Fernsprechnetze, die verschiedenen terrestrischen Mobilfunknetze und die globalen mobilen Satellitenfunkdienste.

Mobile terrestrische- und satellitengestützte Fernsprechdienste sind gegenüber den in dem öffentlichen festen Telefonnetz angebotenen, in der Regel wegen des erforderlichen höheren Aufwandes, deutlich teurer.

Hingegen sind Paging- und Mailbox-Dienste erheblich preiswerter. Dies macht sie für eine große Zahl von Nutzern interessant, da diese Dienste als Möglichkeit angesehen werden, unvorhersehbare Situationen besser meistern zu können.

Mailboxsysteme bieten die Möglichkeit, mit Dritten Nachrichten über eine eigene Mailbox auszutauschen, wie etwa im Telebox-400-IPM Dienst der Deutschen Telekom AG. Dabei kommunizieren die Beteiligten nicht direkt miteinander, sondern in der Regel zeitversetzt. Derjenige, der eine Nachricht erwartet, muß hierzu seine "Box" abfragen.

Darüberhinaus gibt es eine Reihe von Pagingsystemen, wie etwa den SCALL-Dienst der Telekom-Tochter DeTeMobil, die es gestatten, Dritte zu im voraus festgelegten Reaktionen zu veranlassen.

Telekom-Dienste sind beschrieben in:
"Telebox 400 - Mehr Effizienz, Aktualität, Flexibilität und Sicherheit: 4 Bausteine für Ihren Erfolg", Herausgeber: Deutsche Telekom AG, Vertrieb Geschäftskunden;
"Telebox 400-IPM-Produktbeschreibung für IPM und PC-Box-Software", Herausgeber: Deutsche Telekom AG, Forschungs- und Technologiezentrum, Postfach 10 00 03, 64276 Darmstadt;
"Telebox 400-MT-Produktbeschreibung", Herausgeber: Deutsche Telekom AG, Forschungs- und Technologiezentrum, Postfach 10 00 03, 64276 Darmstadt und
"Telebox 400 EDI - Damit übertragen Sie alle Bestellungen, Rechnungen oder Lieferbestätigungen sofort von Computer zu Computer", Herausgeber: Deutsche Telekom AG, Generaldirektion, FB GK 3, Postfach 2000, 53105 Bonn.

Die Inanspruchnahme dieser Dienste erfordert, daß bei terrestrischen festen Kommunikationsnetzen der Aufenthaltsort des Teilnehmers bekannt sein muß, bei mobilen terrestrischen Telefonnetzen, daß dieser Dienst grenzüberschreitend im gleichen technischen Standard angeboten wird, um das gleiche Endgerät überall benutzen zu können und bei Satellitendiensten, daß spezielle, teuere Geräte erforderlich sind.

Der Erfindung liegt die Aufgabe zugrunde, ein allgemeines, länderübergreifendes Paging- und Mailboxsystem zu schaffen, das den vorhandenen terrestrischen und Satellitenfernsehrundfunk benutzt.

Die erfindungsgemäße Lösung der Aufgabe ist im Kennzeichen des Patentanspruchs 1 charakterisiert. Weitere Lösungen bzw. Ausgestaltungen der Erfindung sind in den Kennzeichen der Patentansprüche 2 bis 9 charakterisiert.

Das vorgeschlagene Paging- und Mailboxsystem BBS benutzt eine in Europa weitgehend vorhandene Infrastruktur. Diese besteht für regionale Anwendungen aus dem terrestrischen Fernsehsendernetz und für die überregionale und länderübergreifende Nutzung aus den bereits existierenden Fernsehrundfunksatelliten 12 sowie fernsehtexttauglichen Fernsehempfangsanlagen, wobei an den Fernsehsendern, bzw. an der Feederlinkstation HS für das Satellitenfernsehen je ein Mailboxsystem BBS eingerichtet ist. Die Erfindung kann somit ohne großen Aufwand an bereits vorhandenen Anlagen europaweit realisiert werden.

Das vorgeschlagene System vermeidet den bei terrestrischen Pagingsystemen bestehenden Nachteil, daß die geographische Region bekannt sein muß, in der sich der Adressat aufhält, oder daß sonst der Ruf über viele Sender gleichzeitig oder sequentiell ausgestrahlt werden muß. Gegenüber herkömmlichen Pagingsystemen auf Satellitenbasis besteht der Vorteil, daß keine aufwendige Infrastruktur geschaffen werden muß. Insbesondere sind keine teueren Empfänger erforderlich, sondern es genügen übliche Fernsehempfänger für den terrestrischen und/oder Satellitenfernsehrundfunk mit Fernsehtextdekodern.

Die Erfindung wird im folgenden anhand eines in der Zeichnung prinzipiell dargestellten Ausführungsbeispiels beschrieben.

In der Zeichnung bedeutet:

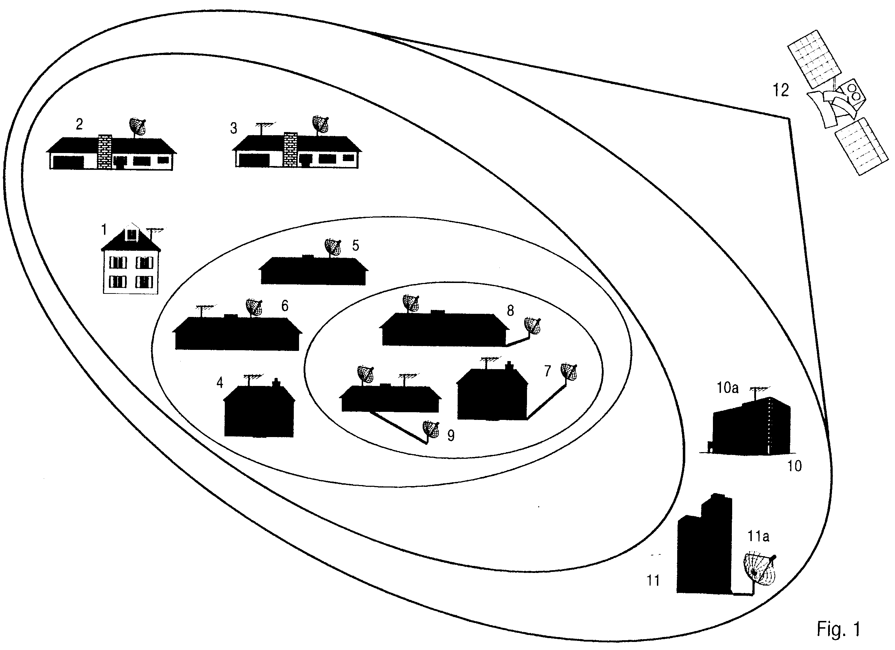

- Fig. 1: ein Paging- und Mailboxsystem mit Fernsehrundfunkteilnehmern.

Im folgenden und in der Zeichnung werden folgende Bezugszeichen für die Systemkomponenten benutzt:
1 Teilnehmer am terrestrischen Fernsehrundfunk
2 Teilnehmer am Satelliten-Fernsehrundfunk
3 Teilnehmer am terrestrischen- und Satelliten-Fernsehrundfunk
4 Teilnehmer am terrestrischen Fernsehrundfunk mit Fernsehtext-Dekoder
5 Teilnehmer am Satelliten-Fernsehrundfunk mit Fernsehtext-Dekoder
6 Teilnehmer am terrestrischen- und Satelliten-Fernsehrundfunk mit Fernsehtext-Dekoder
7 Teilnehmer am terrestrischen Fernsehrundfunk mit Fernsehtext-Dekoder und Sender, um Nachrichten über Satellit zu einer Mailbox zu übermitteln oder abzufragen
8 Teilnehmer am Satelliten-Fernsehrundfunk mit Fernsehtext-Dekoder und Sender, um Nachrichten über Satellit zu einer Mailbox zu übermitteln oder abzufragen
9 Teilnehmer am terrestrischen- und Satelliten-Fernsehrundfunk mit Fernsehtext-Dekoder und Sender, um Nachrichten über Satellit zu einer Mailbox zu übermitteln oder abzufragen
10 Mail-Box-System in Verbindung mit einem Sender für den terrestrischen Fernsehrundfunk
11 Mail-Box-System in Verbindung mit einer Feederlinkstation für den Satelliten-Fernsehrundfunk
12 Direktstrahlender Satellit für den Satelliten-Fernsehrundfunk

Diese aufgeführten Teilnehmer, Geräte bzw. Apparate und Systeme bilden die in Fig. 1 dargestellte Gesamtanlage bzw. das hier beschriebene Gesamtsystem.

Das vorgeschlagene Paging- und Mailboxsystem besteht aus terrestrischen Fernsehsendern und/oder einem oder mehreren Fernsehrundfunk-Satelliten (DBS) 12 entsprechend Fig. 1. Es wird ein analoges Fernsehsignal abgestrahlt, das direkt empfangen werden kann. Die Empfangsanlagen der Teilnehmer 1-9 können Empfangsanlagen für den analogen terrestrischen Fernsehrundfunk sowie für den Satellitenfernsehrundfunk sein. Die Untermenge der Empfangsanlagen der Teilnehmer 4-9 enthält bekannte fernsehtexttaugliche Dekoder. Im Falle des Satellitenfernsehrundfunks wird dem Satelliten 12 das abzustrahlende Fernsehsignal über eine bekannte Feederlinkstation 11a zugeführt. Die terrestrischen Fernsehsender 10a und/oder die Feederlinkstation 11a sind mit je einem Mailboxsystem 10 bzw. 11 verbunden.

Im folgenden wird die Übermittlung der Information des Nachrichtensenders an ein Mailboxsystem 10 bzw. 11 beschrieben. Eine Mailbox enthält Informationen für Teilnehmer, die dem System als autorisierte Benutzer bekannt gemacht worden sind. Die Informationen für die zugelassenen Teilnehmer empfängt das Mailboxsystem 10 bzw. 11 entweder über
1. öffentliche Netze, zum Beispiel
   a) mittels Telefon (zum Beispiel öffentliches festes Wählnetz, Mobilfunknetze (zum Beispiel C-, D1-, D2-, E-Netz)) unter Zuhilfenahme eines Operators oder eines automatischen Spracherkennungssystems, das den gesprochenen Text in geeigneter Weise in "geschriebenen Text" umformt oder
   b) mittels Telefax oder
   c) E-mail oder
   d) Telebox 400 oder
   e) DFN oder
   f) INTERNET oder
   g) Online-Dienste, wie zum Beispiel T-Online, Compuserve, etc. oder
   h) FTP oder
   i) mittels Datex oder
   j) mittels Teletex oder
   k) mittels Telex
   oder
2. über den Satelliten 12 von einzelnen Teilnehmern 7-9 vermittels eines Senders geringer Leistung und Bandbreite. Als Zugriffsverfahren kommen zum Beispiel FDMA in Verbindung mit slotted-ALOHA in Frage. ALOHA ist beschrieben zum Beispiel in folgenden Veröffentlichungen:
   1.) N. Abramson, "The throughput of packet broadcasting channels", IEEE Trans. Commun. 25 (1977), 117-128;
   2.) D. Raychaudhuri, J. Harman, "Dynamic performance of ALOHA-Type VSAT channels: A simulation study", IEEE Trans. Commun. 38 (1990), 251-259 und
      Slotted ALOHA ist bekannt und beschrieben durch L.G. Roberts, "ALOHA packet system with and without slots and capture", ARPANET Satellite Syst. Note 8, NIC 11290, June 1972 (reprinted in: Comput. Commun. Rev., April 1975).

Im folgenden wird die Benachrichtigung des Nachrichtenempfängers durch das Mailboxsystem 10 bzw. 11 beschrieben.

Die Feederlinkstation 11a und/oder die terrestrischen Fernsehsender 10a fügen dem zur Ausstrahlung vorgesehenen Fernsehsignal in der Austastlücke regelmäßig eine aktualisierte Liste der Adressatenkennungen im Fernsehtextformat zu, für die Nachrichten in dem Mailboxsystem 10 bzw. 11 abgelegt sind. Der Adressat kann mit Hilfe einer fernsehtexttauglichen Fernsehrundfunkempfangsanlage erkennen, daß eine Nachricht für ihn vorliegt.

Der Abruf der Information aus dem Mailboxsystem 10 bzw. 11 durch den autorisierten Adressaten kann, wie im Falle des Einspeicherns der Nachricht in das Mailboxsystem 10 bzw. 11, auf prinzipiell zwei Weisen erfolgen, nämlich über
1. öffentliche Netze, zum Beispiel
   a) mittels Telefon unter Zuhilfenahme eines Operators oder eines automatischen Textsprachwandlungssystems, das den im Mailboxsystem 10 bzw. 11 gespeicherten Text in geeigneter Weise umformt und bei Abruf über Telefon als Sprache ausgibt, oder
   b) mittels Telefax oder
   c) E-mail oder
   d) Telebox 400 oder
   e) DFN oder
   f) INTERNET oder
   g) Online-Dienste, wie zum Beispiel T-Online, Compuserve, etc. oder
   h) FTP oder
   i) mittels Datex oder
   j) mittels Teletex oder
   k) mittels Telex
   oder
2. über einen Fernsehrundfunk-Satelliten 12, wobei ein autorisierter Adressat einer Nachricht aus der Menge der Teilnehmer 7-9 mittels eines Senders eine Anforderung zum Mailboxsystem 11 bei der Feederlinkstation 11a über den Runkfunksatelliten 12 mit sehr geringer Leistung und Bandbreite sendet. Daraufhin wird das Mailboxsystem 10 bzw. 11 die Information für den anfordernden Teilnehmer als Fernsehtext formatieren und verschlüsselt aussenden, damit sichergestellt ist, daß nur der Adressat die Nachricht (gegebenenfalls unter Verwendung eines Zusatzes zum Fernsehtextdekoder) empfangen und nutzen kann.

Nach Bestätigung des Empfangs durch den abrufenden Dienstteilnehmer wird in der Mailbox die Information gelöscht und die Liste der Adressaten, für die Information vorliegt, aktualisiert. Somit ist sichergestellt, daß die periodisch im Fernsehtextformat abgestrahlte Liste nicht unnötig lang wird. Je nach Teilnehmerzahl kann es geschehen, daß die Zeilenzahl in der Austastlücke nicht ausreicht. Für diesen Fall ließe Fernsehtext zum Beispiel die Verwendung der vollen Zeilenzahl des Videobildes zur Informations-übertragung zu.

Das System kann ohne technische Probleme europaweit in einem einheitlichen Standard sowohl als Paging- als auch als Mailboxsystem realisiert werden. Mit ihm lassen sich unter Verwendung der Satellitenkomponente europaweit Nachrichten, Suchrufe, u.s.w. zum Beispiel an Reisende übermitteln, wenn diese Zugang zu einem fernsehtexttauglichen Satellitenfernsehempfänger (zum Beispiel in einem Hotel) haben.

Durch die schon vorhandene Infrastruktur ist die Erfindung nationalen terrestrischen Paging- und Mailboxsystemen überlegen. Aber auch gegenüber reinen satellitengestützten Pagingsystemen hat die Erfindung den Vorzug, daß keine speziellen Empfänger benötigt werden.

## Patentansprüche

1. Paging-und Mailboxsystem in Verbindung mit einem oder mehreren terrestrischen und/oder satellitengestützten Fernsehsendern sowie Empfangsanlagen und -geräten zum Empfang der Aussendungen des terrestrischen und/oder satellitengestützten Fernsehrundfunks, dadurch gekennzeichnet,
daß eine an Dritte zu übermittelnde Information oder Nachricht über in dem Paging- und Mailboxsystem (10 bzw. 11) gespeicherte Informationen oder Nachrichten als Fernsehtext in die Austastlücke des analogen Videosignals eingefügt und von bekannten Fernsehtextdekodern in Empfangsanlagen und -geräten für den terrestrischen und/oder den satellitengestützten Fernsehrundfunk erkannt und angezeigt wird.

2. Paging- und Mailboxsystem nach Patentanspruch 1, dadurch gekennzeichnet,
daß die in dem Paging- und Mailboxsystem (10 bzw. 11) enthaltenen Informationen oder Nachrichten in der Austastlücke des analogen Videosignals im Fernsehtextformat übertragen und durch den Fernsehtextdekoder in der Empfangsanlage dekodiert und angezeigt werden.

3. Paging- und Mailboxsystem nach Patentanspruch 1 oder 2, dadurch gekennzeichnet,
daß die in dem Paging- und Mailboxsystem (10 bzw. 11) für bestimmte Teilnehmer enthaltenen Informationen oder Nachrichten nur nach Autorisierung durch den Sender oder Empfänger in die Austastlücke des analogen Videosignals im Fernsehtextformat eingefügt werden.

4. Paging- und Mailboxsystem nach einem oder mehreren der Patentansprüche 1 bis 3, dadurch gekennzeichnet,
daß die in der Austastlücke des analogen Videosignals enthaltene Information bzw. Nachricht im Fernsehtextformat für bestimmte Teilnehmergruppen kodiert wird, und
daß der Fernsehtextdekoder in der Empfangsanlage, die diese bestimmte Teilnehmergruppe betreffende Tatsache nur mit Hilfe eines spezifischen Zusatzes für diese Teilnehmergruppe erkennt und danach anzeigt.

5. Paging- und Mailboxsystem nach einem der Patentansprüche 1 bis 4, dadurch gekennzeichnet,
daß die in der Austastlücke des analogen Videosignals enthaltene Information bzw. Nachricht im Fernsehtextformat für bestimmte Teilnehmer kodiert wird, und
daß der Fernsehtextdekoder in der Empfangsanlage die einen bestimmten Teilnehmer betreffende Tatsache nur mit Hilfe eines spezifischen Zusatzes für diesen Teilnehmer erkennt und danach anzeigt.

6. Paging- und Mailboxsystem nach einem der Patentansprüche 1 bis 4, dadurch gekennzeichnet,
daß die in dem Paging- und Mailboxsystem (10 bzw. 11) für eine Gruppe enthaltenen Nachrichten, über deren Existenz Gruppenmitglieder Kenntnis erlangen, über ein öffentliches, allgemein zugängliches Kommunikationsnetz nur durch Gruppenmitglieder nach Identifikation oder Autorisierung ausgelesen werden können.

7. Paging- und Mailboxsystem nach einem der Patentansprüche 1 bis 4, dadurch gekennzeichnet,
daß die in dem Paging- und Mailboxsystem (10 bzw. 11) für einen Teilnehmer enthaltenen Nachrichten, über deren Existens der Teilnehmer Kenntnis erlangt, über ein öffentliches, allgemein zugängliches Kommunikations-netz nur durch diesen Teilnehmer nach Identifikation oder Autorisierung ausgelesen werden können.

8. Paging- und Mailboxsystem nach Patentanspruch 1 oder 2, dadurch gekennzeichnet,
daß die Empfangsanlage für den Satellitenfernsehrundfunk mit einem Sender ausgestattet ist, der einen Teilnehmer sich über Satellit bei dem Paging- und Mailboxsystem (10 bzw. 11) als autorisiert ausweisen läßt und die für ihn bestimmte Nachricht entweder unkodiert oder kodiert als Fernsehtext aussendet.

9. Paging- und Mailboxsystem nach den Patentansprüchen 1 oder 2, dadurch gekennzeichnet,
daß die Empfangsanlage für den Satellitenfernsehrundfunk zusätzlich einen Sender aufweist, der einen Teilnehmer sich über Satellit bei dem Paging- und Mailboxsystem (10 bzw. 11) als autorisierter Teilnehmer ausweisen läßt und der eine für einen Dritten bestimmte Nachricht in das Paging- und Mailboxsystem einspeichert.
